# EUROPEAN PATENT APPLICATION

(11) **EP 4 434 352 A1**
(43) Date of publication of application: **25.09.2024**
(21) Application number: 23305415.4
(22) Date of filing: 24.03.2023
(51) Int. Cl.: A23L 2/60, A23L 33/21, C07H 1/06, C07H 3/06, A23L 33/125

(54) **FRUCTO-OLIGOSACCHARIDES AND METHOD FOR PREPARATION THEREOF**

(71) Applicant: PCAS, 69134 Ecully Cedex (FR)
(72) Inventor: BOUTET, Julien, 69005 Lyon (FR)
(74) Representative: Regimbeau

(57) **Abstract**

The present disclosure relates to a composition comprising carbohydrates, the carbohydrates comprising short-chain fructo-oligosaccharides (ScFOS) in an amount ranging from 59 wt.% to 64 wt.% relative to the total weight of carbohydrates in the composition, wherein it comprises fructose in an amount less than 1.0 wt.% relative to the total weight of carbohydrates in the composition, in particular less than 0.8 wt.%, more particularly less than 0.5 wt.%.

## Description

### FIELD OF THE INVENTION

The present invention relates to fructo-oligosaccharides and method for preparation thereof.

### BACKGROUND OF THE INVENTION

Fructo-oligosaccharides (FOS) are oligosaccharides that occur naturally in plants, such as vegetables, mushrooms or fruits (e.g., banana, onion, asparagus, burdock, garlic, honey, chicory root and the like). They are composed of linear chains of one glucose unit linked by a α(1→2) bond to a series of fructose units linked by β(1→2) bonds.

FOS possess several beneficial properties that make their use as food ingredient attractive. FOS have a low sweetness intensity; they are also less caloric than saccharose, glucose or fructose and they are considered as soluble dietary fiber. Furthermore, FOS have important beneficial physiological effects such as low carcinogenicity, improved mineral absorption and decreased levels of serum cholesterol, triacylglycerols and phospholipids. FOS are also a recognized class of prebiotics and have been shown to promote a positive impact on gut microbiota composition and metabolic activity. Therefore, FOS are increasingly included in food and beverages, infant foods, animal feed and dietary supplements. They are conveniently used for supplying non-sucrose sweetness, as a texturizer, and/or for their prebiotic properties.

FOS can be produced by three methods namely: (i) extraction from plants (ii) enzymatic production from inulin by endoinulinases and (iii) transfructosylation of sucrose by β-fructofuranosidases. Their extraction from plants being costly and providing low yield, industrial preparation of FOS is typically carried out either by the hydrolytic action of endoinulinases on inulin or by transfructosylation of sucrose by β-fructofuranosidases. In transfructosylation process, β-fructofuranosidases break the linkages present in between sucrose molecules and transfer the fructose to receptor sucrose/FOS. FOS prepared by this method are of short chain length (DP≤6) with a formula α-D-Glu(1→2)-[β-D-Fru(1→2)-]ₙ, where 'n' represents the fructosyl units which varies between 2 and 5 (GF series with a degree of polymerization of 3 to 6 and designated as GF2 to GF5). In production from inulin, indoinulinases hydrolyse the internal linkages of inulin to produce usually FOS with a DP of up to 10 with a formula α-D-Glu(1→2)-[β-D-Fru(1→2)-]ₙ, where 'n' ranges from 2 to 9 and side-products with formula β-D-Fru(1→2)-[β-D-Fru(1→2)-]ₙ, where 'n' ranges between 1 and 9 (F series with DP of 2 to 10 and designated as F2 to F9).

Though the transfructosylation process may appear of great potential because it allows controlling chain length by modulating the reaction time, known transfructosylation processes are not transforming sucrose fully into FOS. ScFOS are mostly obtained in an amount ranging from 50 wt.% to 60 wt.% relative to the total weight of carbohydrates in the composition. However, if the reaction is pushed for too long to further transform sucrose, it tends to produce large amount of by-products such as glucose or fructose and the product obtained becomes yellowish to brown. It appears that the coloration is linked to the amount of free fructose in the composition.

Therefore, there remains a need for a new process for preparing FOS via transfructosylation which allows directly accessing a composition with high amount of scFOS and low amount of free fructose. It allows increasing the product yield whilst limiting the purification costs. The new compositions are stable over time (no coloration) and exhibit advantageous properties, such as efficient prebiotic properties.

### SUMMARY OF THE INVENTION

The invention relates to a composition comprising carbohydrates, the carbohydrates comprising short-chain fructo-oligosaccharides (ScFOS) in an amount ranging from 59 wt.% to 64 wt.% relative to the total weight of carbohydrates in the composition, wherein it comprises fructose in an amount less than 1,0 wt.% relative to the total weight of carbohydrates in the composition, in particular less than 0.8 wt.%, more particularly less than 0.5 wt.%.

The present invention also relates to a method for preparing a composition as described herein, the method comprising a step a) of incubating an enzyme chosen from fructosyltransferase (FTase) or β-fructofuranosidase with saccharose to catalyze the synthesis of ScFOS and obtain a composition comprising ScFOS, monosaccharides and disaccharides.

Further aspects of the invention are as disclosed herein and in the claims.

### DEFINITIONS

As used herein, the term "oligosaccharides" refers to saccharides consisting of at least two and up to ten linked monosaccharide units, i.e., having a degree of polymerization of 2 to 10.

As used herein, the term "degree of polymerization" (DP) refers to the number of monosaccharide units in the oligosaccharides.

As used herein, the term "short-chain fructo-oligosaccharide" (ScFOS) refers to fructo-oligosaccharides having of degree of polymerization (DP) ≤6. ScFOS are represented by the following formula α-D-Glu(1→2)-[β-D-Fru(1→2)-]ₙ, where 'n' represents the number of fructosyl units which varies between 2 and 5 (GFn series with a degree of polymerization of 3 to 6 and designated as GF2 to GF5). Exemplary ScFOS include 1-kestose (GF2, having a DP of 3), 1-nystose (GF3, having a DP of 4), 1^{F}-β-fructofuranosyl nystose (GF4, having a DP of 5) and 1,1,1,1-Kestohexaose (GF5, having a DP of 6).

In other terms, ScFOS consist of linear (2-1)-linked β-D-fructofuranosyl units in
which the fructofuranosyl units (F) are bound to the β-2,1 position of sucrose or
GFn (1F(1-β-D-fructofuranosyl)ₙ₋₁ sucrose).

As used herein, the term "carbohydrate" refers to saccharides, including monosaccharides (e.g., glucose, fructose), disaccharides (e.g., sucrose (also known as saccharose), lactose, maltose), oligosaccharides and polysaccharides.

Percentage by weight, percentage by mole and percentage by volume are respectively abbreviated herein as wt.%, mol.% and vol.%.

### DESCRIPTION OF THE INVENTION

The present invention relates to a composition comprising carbohydrates, the carbohydrates comprising short-chain fructo-oligosaccharides (ScFOS) in an amount ranging from 59 wt.% to 64 wt.% relative to the total weight of carbohydrates in the composition, wherein it comprises fructose in an amount less than 1.0 wt.% relative to the total weight of carbohydrates in the composition, in particular less than 0.8 wt.%, more particularly less than 0.5 wt.%.

The composition of the invention typically comprises mainly carbohydrates. This means that the carbohydrates are the major components of the composition, i.e., they represent more than 50% by weight of the weight of the composition in a dried form (dry weight).

Further components may be present in the composition. In particular, the composition may further comprise water, organic solvents, salts, preservatives, denatured proteins and any combinations thereof. In other words, the composition of the invention can comprise, or consist of, carbohydrates and one or more components selected from the group consisting of water, organic solvent, salts, preservatives, and denatured proteins.

The ScFOS of the composition may further comprise GF4, in particular from 2 wt.% to 25 wt.% of GF4 relative to the total weight of ScFOS in the composition. In some embodiments, the ScFOS comprises from 2.5 wt.% to 20 wt.% of GF4 relative to the total weight of ScFOS in the composition.

The ScFOS of the composition may further comprise GF3, in particular from 25 wt.% to 60 wt.% of GF3 relative to the total weight of ScFOS in the composition. In some embodiments, the ScFOS of the composition further comprises from 30 wt.% to 55 wt.% or from 32 wt.% to 52 wt.% of GF3 relative to the total weight of ScFOS in the composition.

In some embodiments, the ScFOS of the composition comprises, relative to the total weight of ScFOS in the composition, from 35 wt.% to 70 wt.% of GF3 and GF4. In some embodiments, the ScFOS comprises from 40 wt.% to 60 wt.%, or from 45 wt.% to 55 wt.%, relative to the total weight of ScFOS in the composition, of GF3 and GF4.

In some embodiments, the ScFOS of the composition also comprise GF5, notably in an amount ranging from 0 wt.% to 4 wt.% relative to the total weight of ScFOS in the composition.

The ScFOS of the composition may further comprise GF2, in particular from 25 wt.% to 75 wt.% of GF2 relative to the total weight of ScFOS in the composition. In some embodiments, the ScFOS of the composition further comprises from 30 wt.% to 65 wt.% or from 45 wt.% to 60 wt.% of GF2 relative to the total weight of ScFOS in the composition.

Typically, the ScFOS of the composition of the invention comprises GF2, GF3, GF4 and optionally GF5. In some embodiments, the ScFOS of the composition do not comprise GF5.

The carbohydrates of the composition may also comprise saccharose, glucose and/or fructose. Typically, the carbohydrates of the composition do not comprise polysaccharides.

The compositions of the present invention are typically produced from sucrose by transfructosylation with an enzyme with transfructosylating activity as disclosed herein below. Therefore, they typically do not comprise compounds of formula β-D-Fru(1→2)-[β-D-Fru(1→2)-]ₙ, where 'n' ranges between 1 and 9 (F series with DP of 2 to 10 and designated as F2 to F9) and FOS with a formula α-D-Glu(1→2)-[β-D-Fru(1→2)-]ₙ, where 'n' ranges from 6 to 9 (GF series with DP of 7 to 10 and designated as GF6 to GF9). In particular, the composition of the invention is typically free from F3, F4 and F5 and/or typically free from GF7, GF8 and GF9. If present, compounds with formula β-D-Fru(1→2)-[β-D-Fru(1→2)-]ₙ, where 'n' ranges between 1 and 9 and/or FOS with formula α-D-Glu(1→2)-[β-D-Fru(1→2)-]ₙ, where 'n' ranges from 6 to 9 are only present in trace amount (lower than 5 wt.% relative to scFOS, in particular less than 2 wt.%, more particularly less than 1wt.%).

The compositions of the invention, such as obtained by enzymatic route as disclosed herein below (without purification), comprise a total amount of ScFOS ranging from 59 wt.% to 64 wt.% relative to the total weight of carbohydrates in the composition, preferably a total amount of ScFOS ranging from 59 wt.% to 62 wt.% or from 60 wt.% to 63 wt.% or from 61 wt.% to 64 wt.% relative to the total weight of carbohydrates in the composition. Such compositions further comprise fructose. Fructose is a side-product of the enzymatic reaction. However, the amount of fructose in the composition of the invention is typically low. In particular, the compositions comprise less than 1.0 wt.%, preferably less than 0.9 wt.%, or less than 0.8 wt.%, or less than 0.7 wt.%, or less than 0.6 wt.% or even less than 0.5 wt.% of fructose relative to the total weight of carbohydrates in the composition. Preferably, such compositions comprise from 0 wt.% to 1.0 wt.% or from 0.1 wt.% to 0.8 wt.% or from 0.1 wt.% to 0.6 wt.% of fructose relative to the total weight of carbohydrates in the composition.

The compositions of the invention, such as obtained by enzymatic route as disclosed herein below (without purification), typically further comprise glucose, in particular from 17 wt.% to 37 wt.% of glucose relative to the total weight of carbohydrates in the composition, notably from 20 wt.% to 35 wt.% relative to the total weight of carbohydrates in the composition. Glucose is also a side-product of the enzymatic reaction.

The compositions of the invention, such as obtained by enzymatic route as disclosed herein below (without purification), typically further comprise saccharose, in particular less than 15 wt.% of saccharose relative to the total weight of carbohydrates in the composition, preferably less than 12 wt.% or from 1 wt.% to 15% or from 2 wt.% to 12 wt.% relative to the total weight of carbohydrates in the composition. Saccharose is the starting material.

The compositions of the invention may be further purified to increase the total amount of ScFOS in the composition, i.e. saccharose, fructose and glucose are mainly separated from ScFOS. Thus, after purification, the compositions can comprise a total amount of ScFOS ranging from 90 wt.% to 100 wt.% relative to the total weight of carbohydrates in the composition, preferably from 92 wt.% to 99 wt.% or from 94 wt.% to 98 wt.% relative to the total weight of carbohydrates in the composition.

After purification, the compositions can also comprise a total amount of ScFOS ranging from 60 wt.% to 90 wt.% relative to the total weight of carbohydrates in the composition, preferably from 65 wt.% to 85 wt.% or from 70 wt.% to 85 wt.% relative to the total weight of carbohydrates in the composition.

In addition to carbohydrates, the composition can also comprise water, organic solvent, salts, preservatives, and/or denatured proteins.

The compositions of the present invention are useful for the preparation of foodstuffs and beverages, infant foods, dietary supplement, pet food, or in animal feed.

### Preparation methods

The compositions of the present invention can be prepared by enzymatic catalysis, preferably from saccharose, more preferably by transfructosylation of saccharose catalyzed by an enzyme with transfructosylating activity. Enzymes with transfructosylating activity are classified as fructosyltransferase (FTases) or β-fructofuranosidase (FFase or invertase).

In particular, the compositions of the present invention can be prepared by a method as described herein below. The present invention also relates to such a method and to compositions obtained or susceptible to be obtained by the disclosed method.

The method of the invention comprises the following steps:
a) incubating an enzyme chosen from fructosyltransferase (FTase) or β-fructofuranosidase with saccharose to catalyze the synthesis of ScFOS and obtain a composition comprising ScFOS, monosaccharides and disaccharides;
b) optionally denaturing the enzyme after step a) or, when the enzyme is an immobilized enzyme, filtrating the composition obtained after step a);
c) optionally demineralizing and/or polishing the composition obtained after step b).

### Step a)

The method of the invention comprises the step of incubating an enzyme chosen from fructosyltransferase (FTase) or β-fructofuranosidase with sucrose to catalyze the synthesis of ScFOS and obtain a composition comprising ScFOS.

The FTase useful in the present invention typically belongs to class EC 2.4.1, more specifically the FTase is a hexosyltransferase belonging to class EC 2.4.1, notably classes EC 2.4.1.9, 2.4.1.99 or2.4.1.100.

The β-fructofuranosidase useful in the present invention typically belong to class EC 3.2.1.26. In particular, the β-fructofuranosidase can be a 2,1-fructan:2,1-fructan 1 - fructosyltransferase, an inulosucrase or a sucrose/sucrose fructosyltransferase.

The enzyme useful in the present invention is typically obtained from a culture of *Aspergillus* sp.

The enzyme may be produced in yeasts, notably *Pichia pastoris, Saccharomyces cerevisiae,* or *Yarrowia lipolytica.* Preferably the yeast is modified so that it has no invertase activity.

The enzyme can be free or immobilized.

An enzyme suitable to perform step (a) include SEQENZYM^{®} FT that comes from the enzyme collection from Proteus by Seqens.

The incubation is typically performed in an aqueous solution. The concentration of saccharose in the aqueous solution may be from 30 to 80°Brix, typically from 50 to 80°Brix (one degree Brix corresponds to 1 gram of saccharose in 100 grams of solution).

The saccharose useful in the method of the invention can be cane sugar or beet sugar. It can be refined, unrefined, brown or unprocessed.

Step a) can be performed at a temperature from 40 to 65°C, notably from 45 to 60°C.

Step a) can be performed from 1 hour to 72 hours, preferably from 1 to 36 hours.

Step a) is typically performed under stirring.

Step a) is typically performed at a pH ranging from 4 to 9, in particular from 4.5 to 7, more particularly from 5 to 6,5.

Step a) allows obtaining a composition comprising carbohydrates and comprising a total amount of ScFOS ranging from 59 wt.% to 64 wt.% relative to the total weight of carbohydrates in the composition. The composition may be as disclosed herein above.

### Step b)

The method of the invention can further comprise the step of denaturing the enzyme after step a) or, when the enzyme is an immobilized enzyme, filtrating the composition obtained after step a).

The enzyme can be denatured by heat treatment such as pasteurization or sterilization. For instance, the composition obtained after step a) can be heated at a temperature ranging from 80 to 100°C for at least 3 minutes, preferably at least 5 minutes, notably less than 15 minutes. The sterilization is typically carried out at 121 to 135 ° C for 10-20 s.

Alternatively, the enzyme can be removed by filtration when the enzyme is immobilized.

The compositions obtained after step b) can then undergo purification steps, notably step c) and/or d).

### Step c)

The method of the invention can further comprise the step demineralizing and/or polishing of the composition obtained after step b).

Demineralizing aims at removing mineral and organic salts from the composition.

The composition can be colored. Polishing aims at removing this color from the composition. It can be done with activated carbon.

Step c) allows purifying the composition. Such purification can be advised before an eventual step d) as follows, especially when chromatographic separation methods are used in step d).

### Step d)

The method can further comprise a step of removing the monosaccharides and disaccharides from the composition obtained after step b) or c).

The removal may be performed by well-known separation methods such as chromatographic separation methods or nanofiltration membrane separation methods. For example, Sephadex G-10 resin may be used to perform a chromatographic separation. When the separation is performed by nanofiltration, membranes with a molecular weight cut-off of 200Da or 300Da may be used. Typically, removal is performed by simulated moving bed chromatography (SMBC), notably by using the technique of sequential simulated moving bed (SSMB).

Step d) allows increasing the total amount of ScFOS in the composition: the monosaccharides and disaccharides (saccharose, fructose and glucose), or part thereof, are separated from the ScFOS.

Step d) may allow obtaining compositions comprising a total amount of ScFOS ranging from 60 wt.% to 90 wt.% relative to the total weight of carbohydrates in the composition, preferably from 65 wt.% to 85 wt.% or from 70 wt.% to 85 wt.% relative to the total weight of carbohydrates in the composition or may allow obtaining compositions comprising from 90 wt.% to 100 wt.% relative to the total weight of carbohydrates in the composition, preferably from 92 wt.% to 99 wt.% or from 94 wt.% to 98 wt.% relative to the total weight of carbohydrates in the composition.

The method of the invention can be performed as follows: step a) then b) then c) then d), or step a) then b) then d).

The method of the present invention allows obtaining compositions with high proportion of ScFOS and low amount of fructose compared to known methods. The conversion of sucrose is high and yet, the resulting compositions are colorless.

Embodiments of the present invention will now be described by way of the following examples which are provided for illustrative purposes only, and not intended to limit the scope of the disclosure.

### EXAMPLES

### Materials:

Seqenzym^{®} FT sold by Protéus by Seqens with an activity of 6000U/mL.

### Method:

- Weight sucrose solution 70°Brix,
- Add SEQENZYM^{®} FT in an amount of 3g/kg of sucrose solution,
- Incubate at 50°C under continuous agitation for 5 hours,
- stop the reaction by heating at 95°C for 5 minutes.

### Analysis process:

Samples are analyzed by HPLC according to the following method:
- Column: Asahipak-NH2P 50 4E^{™} (Shodex) + precolumn
- Mobile phase: A: water / B: acetonitrile, flow 1mL/min, gradient A/B: 35/65 to 44/56
- ELS detector (Gain 100, Gas pressure 2.1bar, Nebulizer cooling mode, Drift tube 50°C)
- column temperature: 25°C
- Run time: 20 min

Results are provided in table 1.

**Table 1: wt.% of ScFOS, monosaccharides and disaccharides in the composition of the invention**

| | | |
|---|---|---|
| Amount in wt.% relative to total weight of carbohydrates in the composition | Glucose | 26.7 |
| | Saccharose | 11.1 |
| | Fructose | 0.6 |
| | ScFOS | 61.6 |
| Amount in wt.% relative to the total weight of ScFOS | GF2 | 49 |
| | GF3 | 44 |
| | GF4 | 7 |

## Claims

1. A composition comprising carbohydrates, the carbohydrates comprising short-chain fructo-oligosaccharides (ScFOS) in an amount ranging from 59 wt.% to 64 wt.% relative to the total weight of carbohydrates in the composition, wherein it comprises fructose in an amount less than 1.0 wt.% relative to the total weight of carbohydrates in the composition, in particular less than 0.8 wt.%, more particularly less than 0.5 wt.%.

2. The composition according to claim 1, wherein the ScFOS further comprise GF3, in particular from 25 wt.% to 60 wt.% of GF3 relative to the total weight of ScFOS in the composition.

3. The composition according to claim 1 or 2, wherein the ScFOS further comprise GF2, in particular from 25 wt.% to 75 wt.% of GF2 relative to the total weight of ScFOS in the composition.

4. The composition according to any one of claims 1 to 3, wherein it comprises a total amount of ScFOS ranging from 60 wt.% to 63 wt.% relative to the total weight of carbohydrates in the composition.

5. The composition according to any one of claims 1 to 4, wherein the carbohydrates further comprise glucose, in particular from 17 wt.% to 37 wt.% relative to the total weight of carbohydrates in the composition.

6. The composition according to any one of claims 1 to 5, wherein the carbohydrates further comprise saccharose, in particular in an amount of less than 15 wt. % relative to the total weight of carbohydrates in the composition.

7. The composition according to any one of claims 1 to 6, wherein the ScFOS further comprise GF4, in particular from 2 wt.% to 25 wt.% of GF4 relative to the total weight of ScFOS in the composition.

8. The composition according to any one of claims 1 to 7 obtained by enzymatic catalysis, preferably from saccharose.

9. A method for preparing a composition according to any one of claims 1 to 8, the method comprising a step a) of incubating an enzyme chosen from fructosyltransferase (FTase) or β-fructofuranosidase with saccharose to catalyze the synthesis of ScFOS and obtain a composition comprising ScFOS, monosaccharides and disaccharides.

10. The method according to claim 9 wherein it further comprises a step b) of denaturing the enzyme once the incubation is terminated or, when the enzyme is an immobilized enzyme, filtrating the composition obtained after step a).

11. The method according to claim 9 or 10 wherein it further comprises the step of removing the monosaccharides and disaccharides from the composition obtained after step b) or c) to obtain a composition comprising a total amount of ScFOS ranging from 90 wt.% to 100 wt.% relative to the total weight of carbohydrates in the composition.

12. Use of composition according to any one of claims 1 to 8 in foodstuffs, infant food, dietary supplement, pet food, or in animal feed.
